**Europäisches Patentamt**

**European Patent Office**

**Office européen des brevets**

(19)

(11) Veröffentlichungsnummer : **0 355 509 B1**

(12) **EUROPÄISCHE PATENTSCHRIFT**

(45) Veröffentlichungstag der Patentschrift :
01.07.92 Patentblatt 92/27

(51) Int. Cl.⁵ : **B22F 3/00**

(21) Anmeldenummer : **89114297.8**

(22) Anmeldetag : **02.08.89**

(54) **Formteil mit einer inneren Stützmatrix.**

(30) Priorität : **24.08.88 DE 3828706**

(43) Veröffentlichungstag der Anmeldung :
**28.02.90 Patentblatt 90/09**

(45) Bekanntmachung des Hinweises auf die
Patenterteilung :
**01.07.92 Patentblatt 92/27**

(84) Benannte Vertragsstaaten :
**AT BE CH DE ES FR GB IT LI NL SE**

(56) Entgegenhaltungen :
**EP-A- 0 264 040**
**DE-A- 1 296 756**
**US-A- 3 278 279**

(73) Patentinhaber : **Schwäbische Hüttenwerke**
**Gesellschaft mit beschränkter Haftung**
**Wilhelmstrasse 67 Postfach 3280**
**W-7080 Aalen-Wasseralfingen (DE)**

(72) Erfinder : **Härle, Hans A., Dipl.-Ing.**
**Röttingerstrasse 38**
**W-7085 Bopfingen (DE)**

(74) Vertreter : **Lorenz, Werner, Dipl.-Ing.**
**Fasanenstrasse 7**
**W-7920 Heidenheim (DE)**

## Beschreibung

Die Erfindung betrifft ein Formteil mit einer inneren Stützmatrix, die von einem die Form ergebenden Kunststoffüberzug wenigstens teilweise umgeben ist.

Formteile dieser Art werden auf den verschiedensten Gebieten in der Technik eingesetzt. Zur Formgebung und zur Stabilisierung sind sie in ihrem Inneren mit einem Kern aus einer Stützmatrix versehen. Die Stützmatrix kann aus einem Kunststoff bestehen, der z.B. mit Glaskugeln, Glasfasern oder dgl. verstärkt ist. Dabei handelt es sich jedoch um eine sogenannte weiche Matrix, durch die das Bauteil zwar relativ leichtgewichtig wird, jedoch keine hohe Festigkeit besitzt.

Es sind auch bereits Stützmatrizes bekannt, die aus Metall bestehen und damit eine hohe Stabilität und Bruchsicherheit ergeben, aber sie verursachen jedoch ein hohes Gewicht.

Aus der US-A-3 278 279 ist ein Verfahren zur Herstellung von porösen Formteilen bekannt, wobei metallische Teilchen in Form von Stahlwolle, metallischen Drahtstücken, Metallspänen, metallischen Fasern oder ähnliches eingesetzt wird. Die metallischen Teilchen werden dabei in eine Form gepreßt und anschließend gesintert. Gegebenenfalls können den metallischen Teilchen geeignete metallische Additive als Sinterhilfe zugesetzt werden. Die Poren des Formteiles können zumindest teilweise mit Kunststoff getränkt werden bzw. das Formteil kann auch mit einer Kunststoffbeschichtung auf den äußeren Oberflächen versehen werden.

Die EP-A2-0 264 040 beschreibt ein Verfahren zum Herstellen von Formteilen aus Metallteilchen, welche durch Formpressen und anschließendem Sintern gebildet werden, wobei kleine Metalldrahtstücke als Metallteilchen verwendet werden. Das Formteil kann mit Kunstharzen, Elastomeren und Kunststoffen als Füllstoffen bzw. Imprägnierstoffen versehen werden.

Der vorliegenden Erfindung liegt daher die Aufgabe zugrunde, ein Formteil der eingangs erwähnten Art zu schaffen, das sowohl leichtgewichtig als auch hoch belastbar und zu den verschiedensten Zwecken einsetzbar ist.

Erfindungsgemäß wird diese Aufgabe durch die Gegenstände der Ansprüche 1 und 10 gelöst. Weitere Ausbildungsformen der Erfindung sind den Unteransprüchen 2-9 und 11 zu entnehmen.

Die Herstellung von Sinterteilen aus Metallpulver ist allgemein bekannt. Das Pulver wird kalt oder warm formgepreßt und anschließend gesintert. Darunter versteht man ein Erhitzen in reduzierender Atmosphäre auf Temperaturen, die ungefähr in Höhe von 2/3 bis 4/5 des Schmelzpunktes des verwendeten Metallpulvers liegen. Dabei tritt ein Zusammenbacken der Metallflächen ein und eine Verfestigung der Pulvermischung.

Bei Verwendung einer Mischung aus grobem Metallpulver und Metallspänen und/oder Metalldrahtstücken als Ausgangsmaterial, ein Verfahren, das bisher nicht bekannt war, wird sehr grobporiges Gefüge geschaffen, das sehr leichtgewichtig, aber trotzdem sehr stabil ist. Verwendet man nun ein derartiges Sinterteil als Stützmatrix für ein Formteil und umgibt das Formteil wenigstens teilweise mit Kunststoff, so erhält man ein leichtgewichtiges und trotzdem hoch belastbares Formteil, das auf vielen Gebieten der Technik in vorteilhafter Weise eingesetzt werden kann bzw. dort die ihm zugedachten Aufgaben überhaupt erst auf wirtschaftliche Weise erfüllen kann.

Einsatzgebiete sind z.B. Flügelzellenpumpen, Wasserpumpen, Zahnräder, Zahnriemenräder und Druckstücke aller Art.

In vorteilhafter Weise wird man dabei nicht nur die Stützmatrix mit Kunststoff entsprechender Stärke, die selbstverständlich variabel sein kann und in Abhängigkeit von dem Anwendungsfalle zu wählen ist, umgeben, sondern auch die Poren der Stützmatrix wenigstens teilweise mit Kunststoff tränken.

Diese Maßnahme trägt zu einer weiteren Erhöhung der Stabilität und Belastbarkeit bei, führt jedoch nicht zu einer wesentlich höheren Gewichtigkeit. Außerdem kann auf diese Weise das Formteil flüssigkeits- und/oder gasdicht gemacht werden, womit sich dessen Einsatzmöglichkeiten entsprechend erweitern.

So läßt sich z.B. ein erfindungsgemäßes Formteil, das mit Polyurethanfluoräthylen umgeben ist, wobei ggf. in die Poren noch dieser Kunststoff eindringt, eine Gleitlagerbüchse oder eine sonstige Gleitlagerfläche oder -bahn herstellen.

Statt einer vollständigen Ummantelung des Formteiles mit Kunststoff, kann dieses im Bedarfsfalle auch nur teilweise von Kunststoff ummantelt werden oder nur in bestimmten Bereichen mit einem Kunststoffüberzug versehen sein. Dies bedeutet, daß man auf diese Weise bei Beibehaltung einer Leichtgewichtigkeit und großen Belastbarkeit eine Gas- und/oder Flüssigkeitsdurchgängigkeit erreicht. Bei einer derartigen Ausgestaltung läßt sich das erfindungsgemäße Formteil z.B. auch für Filterzwecke oder auch als Katalysator verwenden. Im letzteren Falle wird man Metallpulver, Metalldrahtstücke und/oder Metallspäne verwenden, die aus einem katalytisch wirkenden Werkstoff bestehen oder die damit beschichtet sind. Auf diese Weise läßt sich das erfindungsgemäße Formteil z.B. auch als Katalysator und/oder Filter zur Abgasreinigung von Heizungsanlagen oder Verbrennungsmotoren verwenden.

Im Bedarfsfalle können den Metallteilen auch Keramikstoffe beigemischt werden, womit der Anwendungsbereich des erfindungsgemäßen Formteiles nochmals erweitert wird, wie z.B. bezüglich seiner katalytischen Wirkung und höheren Temperaturbeständigkeit.

Ein weiterer Vorteil des erfindungsgemäßen Formteiles besteht darin, daß es sehr maßgenau ist. Durch den erfindungsgemäßen Stützkern bzw. die Stützmatrix aus dem Sinterteil läßt sich das bei der Aufbringung des Kunststoffes auftretende Schwundverhalten auffangen. Außerdem verbindet sich das Sinterteil sehr gut mit dem Kunststoff, so daß ein fester Verbund entsteht.

Die Stützmatrix aus Sintermetall kann dabei vollständig aus Metalldrahtstüken und/oder Metallspänen in Mischung mit grobem Metallpulver, ggf. unter Zusatz von Keramik und/oder anderer Stoffe, bestehen.

Bei einer Mischung läßt sich eine sehr große Variationsbreite bezüglich Leichtgewichtigkeit, Porengröße und Stabilität bzw. Belastbarkeit und Bruchfestigkeit erreichen.

Die Größe der Metalldrahtstücke und/oder Metallspäne bzw. deren Durchmesser, Dicken und Längen richtet sich nach dem Anwendungsfalle. So sind z.B. Durchmesser bzw. Dicken von 0,1 bis 5 mm und Längen von 0,5 bis 30 mm, vorzugsweise von 0,1 bis 1 mm und 0,5 bis 4 mm, möglich.

Nachfolgend sind zwei Ausführungsbeispiele der Erfindung anhand der Zeichnung prinzipmäßig beschrieben.

Es zeigt:

Fig. 1: ein Zahnrad als Formteil

Fig. 2: ein Filter- bzw. Katalysatorkörper

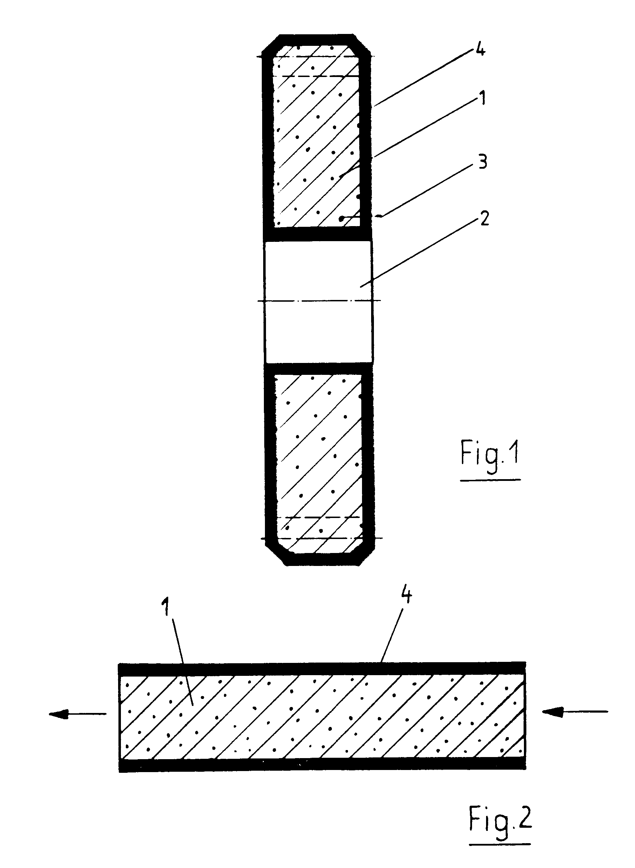

Gemäß Fig. 1 ist ein Zahnrad aus einer Stützmatrix und einer zentralen Bohrung 2 zur Aufnahme des Zahnrades auf einer Welle gebildet.

Die Stützmatrix 1 ist aus formgepreßten Metallspänen gebildet, die anschließend in üblicher Weise gesintert worden sind. Die auf diese Weise hergestellte Stützmatrix 1 wird in eine Kunststoffspritzform gegeben, wonach in üblicher Weise Kunststoff, z.B. Epoxydharz, eingespritzt wird. Auf diese Weise wird die Stützmatrix 1 allseitig mit einem Überzug 4 aus Kunststoff versehen, wobei in dem dargestellten Beispiel der Kunststoffüberzug 4 relativ dünn gewählt ist. Selbstverständlich sind im Bedarfsfalle auch hier beliebige Dicken möglich.

Die auf diese Weise hergestellte Stützmatrix 1 ist sehr grobporig und zwar in einer Art, daß die Poren miteinander in Verbindung stehen. Beim Spritzgießen des Kunststoffes kann somit in die Poren 3 Kunststoff eindringen und diese ausfüllen, womit eine Gas- bzw. Flüssigkeitsdichtheit erreicht wird.

In der Fig. 2 ist ein Filter- bzw. Katalysatorkörper dargestellt. Wie ersichtlich ist dabei von der dargestellten Zylinderform lediglich die Umfangswand mit einem Kunststoffüberzug 4 versehen. Die beiden Stirnseiten sind für einen Gas- oder Flüssigkeitsdurchgang (je nach Einsatzgebiet) unbeschichtet, womit ein zu filterndes Medium in Längsrichtung durch den Filterkörper strömen kann. In diesem Falle wird man die Poren der Stützmatrix nur teilweise mit Kunststoff ausfüllen bzw. in Abhängigkeit von dem zu filternden Medium eventuell vollständig ohne Kunststofftränkung lassen. Im Bedarfsfalle können auch unterschiedliche Porositäten über die Länge des Filterkörpers geschaffen werden.

Soll der Filterkörper zusätzlich oder statt dessen als Katalysatorkörper verwendet werden, so wird man für die formgepreßten Metallspäne oder Drahtstücke bzw. grobe Metallkörner entsprechend katalytisch wirkende Werkstoffe verwenden oder die genannten Metallteile entsprechend damit beschichten.

**Patentansprüche**

1. Formteil mit einer inneren Stützmatrix, die mit einem die Form ergebenden Kunststoffüberzug wenigstens teilweise beschichtet und wenigstens teilweise aus Metalldrahtstücken und/oder Metallspänen gebildet ist, wobei die Stützmatrix (1) eine Mischung aus grobem Metallpulver und Metalldrahtstücken und/oder Metallspänen aufweist, die gemeinsam formgepreßt und anschließend gesintert sind.

2. Formteil nach Anspruch 1, **dadurch gekennzeichnet**, daß die Poren (3) der Stützmatrix (1) wenigstens teilweise mit Kunststoff getränkt sind.

3. Formteil nach Anspruch 2, **dadurch gekennzeichnet**, daß die Stützmatrix (1) nur abschnittsweise mit Kunststoff getränkt ist.

4. Formteil nach Anspruch 1, 2 oder 3, **dadurch gekennzeichnet**, daß der Kunststoff Epoxydharz ist.

5. Formteil nach Anspruch 1, 2 oder 3, **dadurch gekennzeichnet**, daß der Kunststoff Polytetrafluoräthylen ist.

6. Formteil nach Anspruch 1, **dadurch gekennzeichnet**, daß der Mischung Zusatzstoffe, wie z.B. Keramik, beigegeben sind.

7. Formteil nach Anspruch 1, **dadurch gekennzeichnet**, daß die Metallpulver, Metalldrahtstücke und/oder Metallspäne aus einem katalytisch wirkenden Werkstoff bestehen oder damit beschichtet sind.

8. Formteil nach Anspruch 1, **dadurch gekennzeichnet**, daß die Metalldrahtstücke und/oder Metallspäne Durchmesser bzw. Dicken von 0,1 bis 5 mm und Längen von 0,5 bis 10 mm besitzen.

9. Formteil nach Anspruch 8, **dadurch gekennzeichnet**, daß die Metalldrahtstücke und/oder Metallspäne Durchmesser bzw. Dicken von 0,1 bis 1 mm und Längen von 0,5 bis 4 mm besitzen.

10. Verfahren zur Herstellung eines Formteiles mit einer inneren Stützmatrix (1), die wenigstens teilweise von einem die Form ergebenden Kunststoffüberzug umgeben wird, wobei die Stützmatrix (1) wenigstens teilweise aus Metalldrahtstücken und/oder Metallspänen gebildet wird, wobei die Stützmatrix (1) aus einer Mischung aus grobem Metallpulver und Metalldrahtstücken und/oder Metallspänen gebildet wird, die gemeinsam formgepreßt und anschließend gesintert werden, wonach die Stützmatrix (1) wenigstens teilweise mit Kunststoff (4) beschichtet wird.

11. Verfahren nach Anspruch 10, **dadurch gekennzeichnet**, daß die Poren (3) der Stützmatrix (1) wenigstens teilweise mit Kunststoff getränkt werden.

## Claims

1. Shaped article with an internal support matrix at least partially coated with a plastic coating producing the mould and at least partially formed of metal wire pieces and/or metal chips, wherein the support matrix (1) has a mixture of coarse metal powder and metal wire pieces and/or metal chips which are compression moulded and then sintered.

2. Shaped article according to claim 1, characterised in that the pores (3) of the support matrix (1) are at least partially impregnated with plastic.

3. Shaped article according to claim 2, characterised in that the support matrix (1) is only impregnated with plastic in sections.

4. Shaped article according to claim 1, 2 or 3, characterised in that the plastic is epoxy resin.

5. Shaped article according to claim 1, 2 or 3, characterised in that the plastic is polytetrafluoroethylene.

6. Shaped article according to claim 1, characterised in that additional substances, e.g. ceramics, are added to the mixture.

7. Shaped article according to claim 1, characterised in that the metal powder, metal wire pieces and/or metal chips consist of a catalytically active material or are coated therewith.

8. Shaped article according to claim 1, characterised in that the metal wire pieces and/or metal chips have diameters or thicknesses of 0.1 to 5 mm and lengths of 0.5 to 10 mm.

9. Shaped article according to claim 8, characterised in that the metal wire pieces and/or metal chips have diameters or thicknesses of 0.1 to 1 mm and lengths of 0.5 to 4 mm.

10. Process for the production of a shaped article with an internal support matrix (1) at least partially surrounded by a plastic coating producing the mould, the support matrix (1) being formed at least partially of metal wire pieces and/or metal chips, wherein the support matrix (1) is formed of a mixture of coarse metal powder and metal wire pieces and/or metal chips which are compression moulded and then sintered, after which the support matrix (1) is at least partially coated with plastic (4).

11. Process according to claim 10, characterised in that the pores (3) of the support matrix (1) are at least partially impregnated with plastic.

## Revendications

1. Pièce moulée ayant une matrice interne de support qui est revêtue au moins partiellement d'une enveloppe en matière synthétique déterminant la forme et qui est formée au moins partiellement de fils métalliques et/ou de copeaux métalliques, dans laquelle la matrice de support (1) comprend un mélange de poudre métallique grossière et de fils métalliques et/ou de copeaux métalliques, lesquels sont soumis ensemble à un formage par pression, puis à un frittage.

2. Pièce selon la revendication 1, caractérisée en ce que les pores (3) de la matrice de support (1) sont au moins partiellement imprégnés de matière synthétique.

3. Pièce selon la revendication 2, caractérisée en ce que la matrice de support (1) n'est imprégnée de matière synthétique que par secteurs.

4. Pièce selon la revendication 1, 2 ou 3, caractérisée en ce que ladite matière synthétique est une résine époxy.

5. Pièce selon la revendication 1, 2 ou 3, caractérisée en ce que ladite matière synthétique est le polytétrafluoréthylène.

6. Pièce selon la revendication 1, caractérisée en ce que des matières additionnelles, par exemple céramiques, sont ajoutées au mélange.

7. Pièce selon la revendication 1, caractérisée en ce que les poudres, fils et/ou copeaux métalliques sont faits ou revêtus d'un matériau à effet catalytique.

8. Pièce selon la revendication 1, caractérisée en ce que les fils et/ou copeaux métalliques ont des diamètres ou épaisseurs de 0, 1 à 5 mm et des longueurs de 0,5 à 10 mm.

9. Pièce selon la revendication 8, caractérisée en ce que les fils et/ou copeaux métalliques ont des diamètres ou épaisseurs de 0, 1 à 1 mm et des longueurs de 0,5 à 4 mm.

10. Procédé de fabrication d'une pièce moulée ayant une matrice interne de support (1) qui est entourée au moins partiellement d'une enveloppe en matière synthétique déterminant la forme et qui est formée au moins partiellement de fils métalliques et/ou de copeaux métalliques, dans lequel la matrice de support (1) comprend un mélange de poudre métallique grossière et de fils métalliques et/ou de copeaux métalliques, lesquels sont soumis ensemble à un formage par pression, puis à un frittage, après quoi la matrice de support (1) est revêtue au moins partiellement de matière synthétique (4).

11. Procédé selon la revendication 10, caractérisé en ce que les pores (3) de la matrice de support (1) sont au moins partiellement imprégnés de matière synthétique.

Fig.1

Fig.2